# EUROPEAN PATENT SPECIFICATION

(11) **EP 1 195 545 B1**
(45) Date of publication and mention of the grant of the patent: **24.10.2007**
(21) Application number: 01123782.3
(22) Date of filing: 04.10.2001
(51) Int. Cl.: F16J 3/04

(54) **Spiral bellows structure**
Faltenbalg mit spiralförmiger Struktur
Soufflet présentant une structure spirallée

(30) Priority: 04.10.2000 JP 2000305474
(43) Date of publication of application: 10.04.2002
(73) Proprietor: EXCELL CORPORATION, Matsudo-shi, Chiba-ken (JP)
(72) Inventor: Nakagawa, Tatsuya, Matsudo-shi, Chiba-ken (JP); Ezaki, Yasuo, Nitta-gun, Gunma-ken (JP)
(74) Representative: Weser, Wolfgang

(56) References cited:
- DE-A- 3 407 500
- US-A- 4 844 486

## Description

### BACKGROUND OF THE INVENTION

### 1. Field of the Invention

This invention generally relates to a bellows structure and, in particular, to a hollow plastic product having a bellows section for use as a duct for passing a fluid such as a gas or liquid therethrough.

The present invention is particularly advantageous in an application in which use is made of a hollow product, such as a duct, pipe or hose, requiring a bellows structure, for use in passing a fluid such as a gas or liquid therethrough. More specifically, the present invention is particularly useful for a duct to be used in an automobile, such as an intake or a supercharger duct of an engine, which requires the provision of a bellows structure as a part thereof.

### 2. Description of the Prior Art

A duct having a bellows section for the ease of assembly and/or absorption of vibration is well known and used, often, for intake or discharge of fluid, such as a gas or liquid. In such a conventional duct, the bellows section is typically comprised of a plurality of triangular-shaped, alternately arranged peak and valley portions connected in series along the longitudinal axis of the bellows section, and each of the peak and valley portions extends around the longitudinal axis of the bellows section generally in the shape of a ring. Each of the peak sections is generally triangular in shape and its apex defines the largest diameter of the bellows section, whereas each of the valley portions is also generally rectangular in shape and its apex or bottom defines the smallest diameter of the bellows section.

In the conventional bellows structure, the apex of each of the peak sections defines a closed circle around the longitudinal axis of the bellows section so that the peak sections may be said to be independent from each other in this respect. In other words , it can be said that two adjacent ones of a plurality of peak portions of the bellows section define two triangular spaces which are isolated by an intervening valley portion. The same arguments hold true also for the valley portions in the conventional bellows structure so that it may be said that the valley portions are also independent from each other.

Thus, the cross sectional area of the flow passage defined by such a conventional bellows structure changes periodically along its longitudinal axis such that the cross sectional area is at maximum at a location corresponding to the apex of a peak portion and at minimum at a location corresponding to the apex or bottom of a valley portion. In particular, the cross sectional area changes suddenly at the peak of each of the peak and valley portions, thereby defining a discontinuity in the change of cross sectional area. Thus, the conventional bellows structure presents an effective resistance against the flow of a fluid therethrough because of the occurrence of turbulence and eddies in the flowing fluid. Such turbulence and eddies reduces the effective flow area and contributes to increase the flow resistance (see e.g. US-A-1 864 861).

In addition, such turbulence and eddies produced by the conventional bellows structure can cause significant noise particularly in the case of intake or supercharger ducts for use in an automobile. In order to cope with this, it may be required to take measures to reduce such noise and/or reduce the flow rate, which, in turn, could deteriorate the performance of an engine. Such noise could be reduced by connecting a resonator having a noise reducing characteristic to the duct or wrapping a noise generating portion of the duct with a foam material, such as urethane, but this requires an additional component and cost.

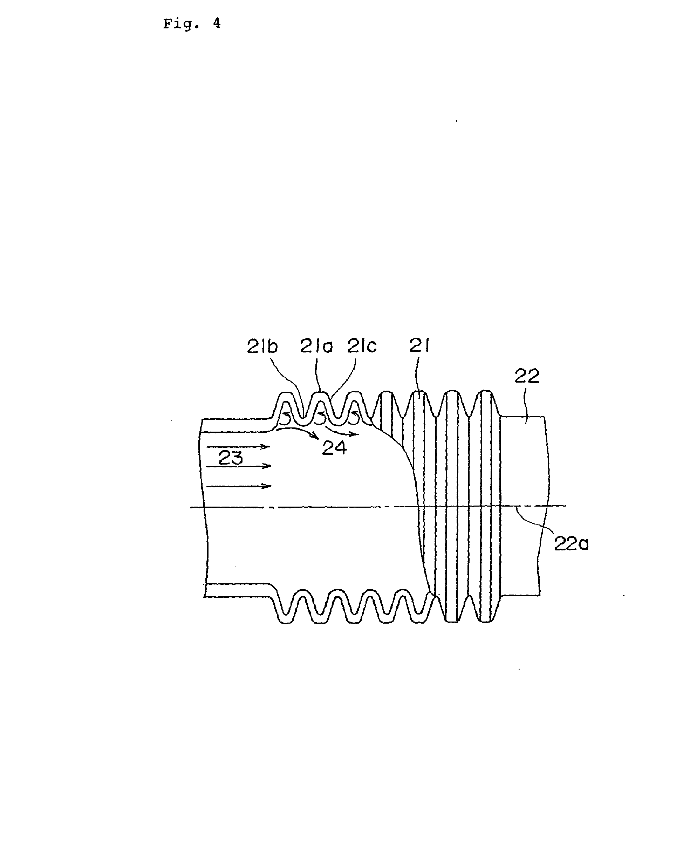

A typical prior art bellows structure will be described more in detail with reference to Fig. 4. As shown, a plastic pipe includes a bellows section 21 and a duct section 22, and the bellows section 21 is comprised of a plurality of peak portions 21a, valley portions 21b and intermediate portions 21c. Here, curved top portions are defined as the peak portions and the curved bottom portions are defined as the valley portions with intervening straight sections defined as the intermediate portions 21c. However, at least a part of the intermediate portions 21c may be included in the peak portions 21a and the remainder of the intermediate portions 21c, if any, may be included in the valley portions 21b.

As shown in Fig. 4, the peak and valley portions 21a, 21b define separate rings or circles around and arranged along the longitudinal axis 22a. Thus, when a fluid flows through this pipe in the direction indicated by arrows 23, turbulence and eddies as indicated by arrows 24 are produced at the bellows section 21. Since the occurrence of such turbulence and eddies takes place at each of the peak and valley portions 21a, 21b, the flow resistance stemming from such turbulence and eddies increases as the number of peak and valley portions of the bellows section 21 increases, resulting in an increase in a reduction of the effective flow area and an increase in the production of noise.

US 4844486 discloses bellows for enclosing joints on axles of motor vehicles. At least one bellow rib extends spirally from one collar to the other. DE 3407500 A1 discloses bellows having the same feature for protecting joints, knuckles, slide ways, tracks and plug connections.

### SUMMARY OF THE INVENTION

In accordance with the present invention, there is provided the use of a bellows structure as section of a duct for passing a fluid therethrough which can advantageously minimize or eliminate the problems of the prior art as decribed above while maintaining the original characteristic of a straight bellows structure such as a high degree of flexibility in bending and adsorption of vibrations.

A bellows structure used in the present invention includes at least one peak portion and a corresponding valley portion which extends in parallel spirally with respect to its longitudinal axis. Preferably, the peak portion is generally triangular in shape and its apex defines the largest diameter of the bellows structure. The peak portion extends radially outwardly from the corresponding valley portion, and includes a curved top and a pair of side walls which extend from opposite ends of the curved top to thereby define a channel or groove of a generally triangular shape.

A plurality of peak and corresponding valley portions are provided at the same spiral pitch, whereby each of the corresponding valley portions is located between a corresponding peak portion and the next adjacent peak portion.

In accordance with the present invention, since the peak portion extends spirally along a peripheral wall with respect to the longitudinal axis of a bellows structure, the fluid flowing through the bellows structure can flow along the triangular space defined by the peak portion so that the fluid is prevented from causing turbulence and eddies as much as possible.

It is therefore a primary object of the present invention to provide the use of an improved bellows structure whose flow resistance is minimized while keeping the original bellows characteristics, i.e., the characteristics of a straight bellows structure, substantially unchanged.

Another object of the present invention is to provide the use of an improved bellows structure whose flow resistance remains substantially unchanged irrespective of its length.

Another object of the present invention is to provide the use of an improved bellows structure suitable for use as part of ducts used in automobiles.

Another object of the present invention is to provide the use of an improved bellows structure which is sturdy and reliable in structure and easy to manufacture.

A further object of the present invention is to provide the use of a hollow plastic product particularly suitable for use in an automobile.

Other objects, advantages and novel features of the present invention will become apparent from the following detailed description of the invention when considered in conjunction with the accompanying drawings.

### BRIEF DESCRIPTION OF THE DRAWINGS

Fig. 1 (a) is a schematic illustration showing in front view a hollow plastic product having a bellows section constructed in accordance with the present invention;
Fig. 1 (b) is a schematic illustration showing in side view the hollow plastic product shown in Fig. 1 (a);
Fig. 1 (c) is a schematic illustration showing in developed view a portion of the bellows section of the hollow plastic product shown in Fig. 1 (a):
Fig. 1 (d) is a schematic illustration showing in longitudinal cross section the hollow plastic product shown in Fig. 1 (a);
Figs. 2 (a) and (b) are schematic illustrations in longitudinal cross section and side view which are useful for explaining the function of the present invention;
Figs. 3 (a) and (b) are schematic illustrations which are useful for explaining the spiral angle of the present invention; and
Fig. 4 is a schematic illustration showing partly in longitudinal cross section a typical conventional bellows structure.

### DESCRIPTION OF THE PREFERRED EMBODIMENTS

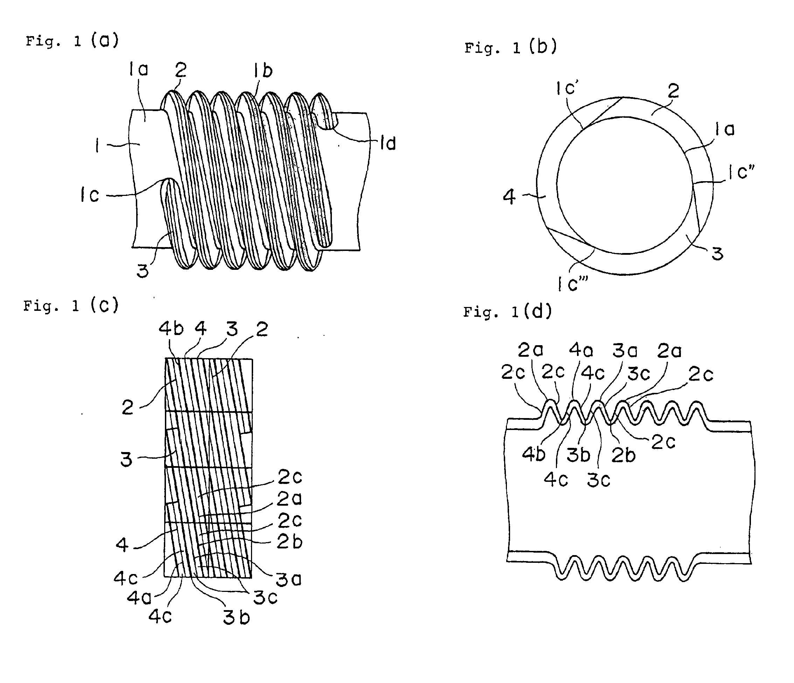

Referring now to Figs. 1 (a) through (d), there is schematically shown a hollow plastic product 1 constructed as an air intake system of an internal combustion engine for use in an automobile according to one embodiment of the present invention. As shown, the product 1 includes a pipe or duct section 1a and a bellows section 1b and is fabricated from a plastic material in an integrated structure. The bellows section 1b includes a spiral bellows structure according to the present invention as will be described in detail below.

It is to be noted that the preferred embodiment shown in Fig. 1 (a) through (d) has a multi (3 in this example) spiral bellows structure. Thus, there are provided three spiral bellows 2, 3 and 4 having the same spiral pitch. As best shown in Fig. 1 (a), each of the three bellows 2, 3 and 4 extends spirally along the longitudinal axis of the product 1 and has a spiral start position 1c and a spiral end position 1d. In the embodiment shown in Fig. 1 (a), since there are three bellows 2, 3 and 4, there are three spiral start positions 1c', 1c" and 1c'" which are located on the same circumference of the pipe section 1 equally spaced apart from one another, i.e., at the same location with respect to the longitudinal axis as best shown in Fig. 1 (b). In the illustrated embodiment, the spiral start positions 1c', 1c" and 1c'" are spaced apart from one another over 120 degrees. Although only one spiral end position 1d is shown in Fig. 1a, there are actually three spiral end positions 1d', 1d" and 1d'" (not shown) which are also equally spaced apart from one another around the circumference of the pipe section, i.e., located at the same location with respect to the longitudinal axis . However, it is to be noted that it is not by all means necessary for the spiral start and end positions to be located at the respective same locations with respect to the longitudinal axis, though there are cases in which such an arrangement is preferable.

Thus, although the three spiral bellows 2, 3 and 4 are provided in the structure shown in Fig. 1 (a) and (b), only one or two of such bellows 2, 3 and 4 may be provided in accordance with the principle of the present invention. For example, in the case in which only one such bellows 2 is provided, only one peak portion and a corresponding valley portion extend spirally and in parallel with each other, in which case the valley portion may be viewed as an extension of the duct section 1.

Fig. 1 (c) shows schematically how the three sprial bellows 2, 3 and 4 extend on a developed surface corresponding to a hypothetical peripheral surface as an extension of the duct section 1a. Fig. 1 (d) shows in cross section the structure of the bellows section 1b in detail. As shown, first bellows 2 includes a curved top 2a and a pair of side walls 2c, 2c, which together define a spiral peak portion, and a corresponding valley portion 2b. As shown, the peak portion comprised of the curved top 2a and the pair of side walls 2c, 2c generally has a triangular-shaped space which continuously extends spirally with respect to the longitudinal axis of the bellows section 1b. Similarly, second bellows 3 includes a curved top 3a and a pair of side walls 3c, 3c, which together define a spiral peak portion, and a corresponding valley portion 3b, and, moreover, third bellows 4 includes a curved top 4a and a pair of side walls 4c, 4c, which together define a spiral peak portion, and a corresponding valley portion 4b. As can be understood easily from Fig. 1 (d), a valley portion 2b, 3b or 4b is located between a corresponding peak portion 2a-2c, 3a-3c or 4a-4c and the next adjacent peak portion 3a-3c, 4a-4c or 2a-2c. In the case where only one bellows 2 is provided in the structure shown in Fig. 1 (d), then the peak portions 3a-3c and 4a-4c will be all reduced to the valley portions 2b. In this instance, since the valley portions 2b, 3b and 4b are substantially the same in structure, the valley portion 2b would extend between two adjacent peak portions 2a-2c and 2a-2c, thereby providing a substantially flat peripheral surface.

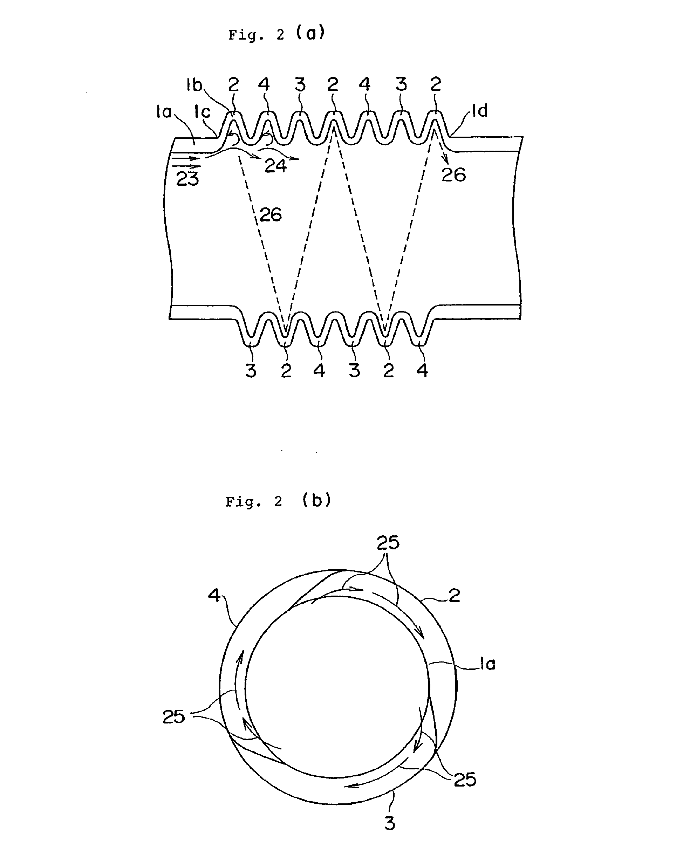

Therefore, in the embodiment shown in Figs. 1 (a) through (d), it can be understood that there are provided three spiral flow passages which extend around and along a hypothetical core flow passage defined by the duct section 1a. Since each of these three spiral flow passages defined by three bellows 2, 3 and 4 extends continuously, the fluid can enter into and flow along each of these spiral bellows 2, 3 and 4 spirally and then merge into the main flow without discontinuity. This aspect of the present invention will be described more in detail with reference to Figs. 2 (a) and (b) below.

As shown in Fig. 2 (a), a hollow plastic product constructed in accordance with one embodiment of the present invention includes a duct section 1a, which basically defines a main flow passage for a fluid, and a spiral bellows section 1b which starts from a spiral bellows start position 1c on the duct section 1a and ends with a spiral bellows end position 1d on the duct section 1a. And, the spiral bellows section 1b has a multi-spiral bellows structure so that three bellows 2, 3 and 4 having the same spiral pitch are provided in parallel to each other in the spiral bellows section 1b.

As the fluid flows through the duct section 1a in the direction indicated by the arrows 23, a part of the fluid enters into the spiral channels defined by the spiral bellows 2, 3 and 4 so that turbulence and eddies may be produced as indicated by the arrows 24. However, since the part of the fluid which enters into the spiral channels do not need to come out of the channels immediately and it may be allowed to flow along the spiral channel smoothly, the turbulence and eddies tend to be suppressed or damped as the fluid flows toward downstream. For example, a part of the fluid may flow into a spiral groove or channel indicated by a spiral locus 26 defined by the spiral bellows 2 from its start position 1c and may flow along the spiral groove all the way as indicated by the arrows 25 and then come out of the spiral groove at end position 1d to merge into the main flow. As a result, even if some turbulence and eddies are produced when the flow first encounters the spiral bellows section 1b at its start position 1c, they can become damped as the flow proceeds in the downward direction because the spiral grooves allow the fluid to flow smoothly in the spiral paths rather than flowing over a plurality of inwardly extending bumps.

As may be best understood from Figs. 2 (a) and (b), the cross sectional area of the flow passage defined by the hollow plastic product gradually expands from that of the duct section 1a while the fluid flows over a distance approximately equal to the bottom of the triangular-shaped groove defined by the bellows from the start position 1c, but remains substantially constant until the fluid reaches a position approximately the bottom of the triangular-shaped groove short of the end position 1d. Then, the cross sectional area is gradually reduced to that of the duct section 1a. Accordingly, the expansion and contraction of the cross sectional area of the flow passage in the present invention occurs only once and gradually rather than suddenly. This is one of the reasons why the flow resistance can be minimized in the present invention.

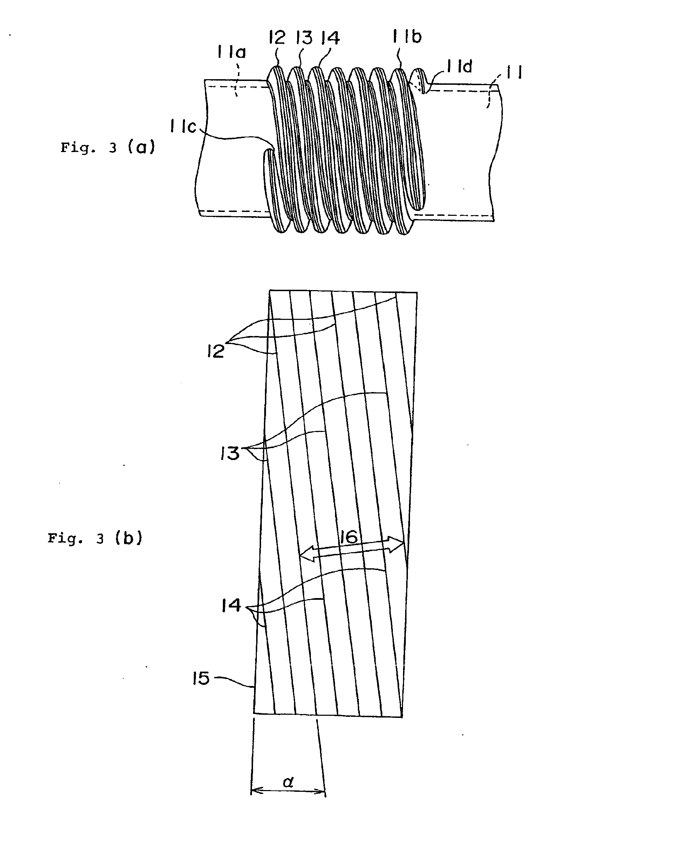

As shown in Figs. 3 (a), a hollow plastic product 11 constructed in accordance with one embodiment of the present invention includes a duct section 11a and a bellows section 11b, which includes three spiral bellows 12, 13 and 14 having the same pitch and extending from a circumferential start position 11c to a circumferential end position 11d on the duct section 11a. Thus, each of the three bellows 12, 13 and 14 extend spirally and in parallel along a peripheral surface of the bellows section 1b over the same distance. Fig. 3 (b) shows the peripheral surface of the bellows section 11b when developed or unrolled on a flat plane. The top and bottom ends of the surface shown in Fig. 3 (a) are in parallel to the longitudinal axis of the structure shown in Fig. 3 (a) and they should be brought together when the surface shown in Fig. 3 (b) has been rolled to define the structure shown in Fig. 3 (a).

Fig. 3 (b) shows how the apexes of bellows 12, 13 and 14 extend on the peripheral surface of the bellows section 11b. As shown, the bellows 12, 13 and 14 are equally spaced apart from one another and they extend in parallel and have the same angle "alpha" with respect to a line normal to the center line or longitudinal axis of the bellows section 11b. This angle "alpha" may be set at any desired value in consideration of the number of bellows provided in the bellows section 11b, the spiral pitch of the bellows, the outer diameter of the spiral bellows and the shape of the spiral bellows. It is to be noted that although the spiral bellows shown in the embodiment are generally triangular in shape, the shape should not be limited only to this and any other shape can be used, if desired.

The flow resistance of the bellows section 11b varies depending on this angle "alpha." The larger the angle "alpha", the smaller the flow resistance. However, it is to be noted that the original characteristics, i.e., flexibility, of the bellows structure becomes reduced as the angle "alpha" increases. That is, as the angle "alpha" increases, the bellows section 11b becomes more difficult to bend, expand and contract so that its flexibility is reduced. Described more in detail in this respect, the original flexibility characteristics, such as bending, expanding and contracting, of the bellows section 11b are exhibited among the bellows 12, 13 and 14 in the direction indicated by the double-sided arrow 16. Thus, the original flexibility characteristics of the bellows section 11b is reduced approximately by a factor of cosine "alpha." It should thus be clear that there is an optimal range of values for angle "alpha." The most preferred value for angle "alpha" in the structure shown in Fig. 3 (a) and (b) has been found to be 7.9 degrees. However, the tradeoff between the flow resistance reduction effects and the flexibility effects should not be limited to this value alone. It has been found that the flow resistance reduction effects can be obtained for angle "alpha" equal to 3 degrees or more; however, the angle "alpha" should be equal to or less than 45 degrees in consideration of the flexibility characteristics. Accordingly, a preferred range of values for angle "alpha" is between 6 degrees and 20 degrees.

As a specific example, the following table shows a significant effect of flow resistance reduction when the structure shown in Fig. 1 has been actually applied to an air intake duct of an automobile engine. In this case, the duct section 1a had an outer diameter of 65 mm and the bellows section 1b had an outer diameter of 80 mm and a longitudinal length of 86 mm with the angle "alpha" equal to 7.9 degrees. The total length of the product was 1,100 mm. The air was forced to flow through the hollow plastic product at a constant flow rate and the pressure losses were measured.

**Table 1**

| Bellows | Pressure Loss (relative value) |
|---|---|
| Prior Art | 100 |
| Invention | 91 |

In the example above, the bellows section 1b corresponds approximately 8% of the total length of product 1. If the bellows section 1b were set to be larger in percentage, the larger effects would be obtained by the present invention.

The present invention should not be limited only to an application to an air intake duct of an automobile engine and it can be applied to various ducts, including an intake/discharge duct. Of importance, since the turbulence and eddies are reduced and/or tend to be damped according to the present invention, the noise resulting from the flowing of fluid is also reduced. The fluid is not limited to a gas, such as air, but the fluid may also be liquid.

Preferably, a bellows structure or a hollow plastic product including a bellows section according to the present invention is preferably manufactured as a unit by a plastic molding technique, such as blow molding or injection molding. Use may be made of various plastic materials in manufacturing the present product as long as it can be used for plastic molding. In particular, the bellows section 1b is generally desired to be sufficiently flexible so that it is preferably made of a relatively soft plastic material, such as a thermoplastic elastomer, e.g., a polyolefine family elastomer, a polyamide family elastomer, polystyrene family elastomer and polyester family elastomer. As an example, the duct section 1a may be made of a relatively hard plastic material and the bellows section 1b may be made of a relatively soft plastic material.

While the above provides a full and complete disclosure of the preferred embodiments of the present invention, various modifications, alternate constructions and equivalents amy be employed without departing from the scope of the invention. Therefore, the above description and illustration should not be construed as limiting the scope of the invention, which is defined by the appended claims.

## Claims

1. Use of a bellows as section of a duct for passing a fluid therethrough,
wherein said bellows has a spiral structure having a longitudinal axis (22a), comprising:
at least one peak portion (2a, 3a, 4a) extending spirally around and along said longitudinal axis; and
at least one valley portion (2b, 3b, 4b) extending spirally around and along said longitudinal axis and in parallel with said at least one peak portion;
wherein said peak and valley portions are continuously connected to thereby define a flow passage having a center axis corresponding to said longitudinal axis,
**characterized in that** a plurality of peak and corresponding valley portions are provided at the same spiral pitch, whereby each of the valley portions is located between a corresponding peak portion and the next adjacent peak portion, so to form a multi spiral bellows.

2. The use of Claim 1,
wherein said peak and valley portions are made of a plastic material.

3. The use of Claim 2,
wherein said plastic material is a thermoplastic elastomer.

4. The use of Claim 3,
wherein said structure is manufactured by blow molding.

5. The use according to any one of Claims 1 to 4,
wherein a spiral angle (α) defined between a line normal to said longitudinal axis and said peak portion is equal or larger than 3 degrees, but equal to or less than 45 degrees.

6. The use of Claim 5,
wherein a preferred range of said spiral angle (α) is between 6 degrees and 20 degrees.

7. The use of Claim 6,
wherein said spiral angle amounts to 7.9 degrees.

8. The use according to any one of Claims 1 to 7,
wherein each of said at least one peak portion includes a curved top (2a, 3a, 4a) and a pair of side walls (2c, 3c, 4c) extending from opposite ends of said curved top to thereby define a generally triangular-shaped groove.

9. The use according to any one of Claims 1 to 8, wherein said fluid is a gas.

10. The use according to any one of Claims 1 to 8, wherein said fluid is a liquid.

## Patentansprüche

1. Verwendung eines Faltenbalgs als Abschnitt einer Rohrleitung zum Durchleiten eines Fluids, wobei der Faltenbalg eine Wendelstruktur mit einer Längsachse (22a) hat,
aufweisend:
mindestens einen Gipfelabschnitt (2a, 3a, 4a), der sich um die Längsachse herum und längs derselben wendelt; und
mindestens einen Talabschnitt (2b, 3b, 4b), der sich um die Längsachse herum und längs derselben sowie parallel zu dem mindestens einen Gipfelabschnitt verläuft, wobei die Gipfel- und Talabschnitte zusammenhängend verbunden sind, um dadurch einen Strömungsdurchlass, dessen Mittenachse der Längsachse entspricht, zu definieren,
**dadurch gekennzeichnet, dass**
eine Mehrzahl Gipfel- und entsprechender Talabschnitte bei gleicher Wendelganghöhe vorgesehen sind, wobei jeder der Talabschnitte zwischen einem entsprechenden Gipfelabschnitt und dem nächstbenachbarten Gipfelabschnitt angeordnet ist, um so einen Faltenbalg mit mehrgängiger Wendelstruktur zu bilden.

2. Verwendung nach Anspruch1, wobei die Gipfel- und Talabschnitte aus einem Kunststoffmaterial gefertigt sind.

3. Verwendung nach Anspruch 2, wobei das Kunststoffmaterial ein thermoplastisches Elastomer ist.

4. Verwendung nach Anspruch 3, wobei die Struktur durch Blasformen hergestellt wird.

5. Verwendung nach einem der Ansprüche 1 bis 4, wobei der Wendelsteigungswinkel (α), der zwischen einer Linie senkrecht zur Längsachse und dem Gipfelabschnitt definiert ist, gleich oder größer als 3 Grad, aber gleich oder kleiner als 45 Grad ist.

6. Verwendung nach Anspruch 5, wobei ein bevorzugter Bereich des Wendelwinkels (α) zwischen 6 Grad und 20 Grad liegt.

7. Verwendung nach Anspruch 6, wobei der Spiralwinkel 7,9 Grad beträgt.

8. Verwendung nach einem der Ansprüche 1 bis 7, wobei jeder der mindestens einen Gipfelabschnitte eine gekrümmte Spitze (2a, 3a, 4a) und ein Paar Seitenwände (2c, 3c, 4c) einschließt, die sich von entgegengesetzten Enden der gekrümmten Spitze erstrecken und **dadurch** eine im allgemeinen dreieckigförmige Rille definieren.

9. Verwendung nach einem der Ansprüche 1 bis 8, wobei das Fluid ein Gas ist.

10. Verwendung nach einem der Ansprüche 1 bis 8, wobei das Fluid eine Flüssigkeit ist.

## Revendications

1. Utilisation d'un soufflet en tant que section d'un conduit afin de faire passer un fluide à travers,
dans lequel ledit soufflet présente une structure en hélice présentant un axe longitudinal (22a), comprenant :
au moins une partie de crête (2a, 3a, 4a) s'étendant en hélice autour dudit axe longitudinal et le long de celui-ci ; et
au moins une partie de creux (2b, 3b, 4b) s'étendant en hélice autour dudit axe longitudinal et le long de celui-ci et parallèlement à ladite au moins une partie de crête ;
dans lequel lesdites parties de crête et de creux sont reliées de manière continue afin de définir ainsi un passage d'écoulement présentant un axe central correspondant audit axe longitudinal,
**caractérisée en ce qu'**une pluralité de parties de crête et de creux correspondantes est agencée au même pas hélicoïdal, de telle sorte que chacune des parties de creux est située entre une partie de crête correspondante et la partie de crête adjacente suivante de manière à former un soufflet à hélices multiples.

2. Utilisation selon la revendication 1,
dans laquelle lesdites parties de crête et de creux sont réalisées en une matière plastique.

3. Utilisation selon la revendication 2,
dans laquelle ladite matière plastique est un élastomère thermoplastique.

4. Utilisation selon la revendication 3,
dans laquelle ladite structure est fabriquée par extrusion-soufflage.

5. Utilisation selon l'une quelconque des revendications 1 à 4,
dans laquelle un angle d'hélice (α) défini entre une ligne normale audit axe longitudinal et ladite partie de crête est supérieur ou égal à 3 degrés, mais inférieur ou égal à 45 degrés.

6. Utilisation selon la revendication 5, dans laquelle une plage préférée dudit angle d'hélice (α) est comprise entre 6 degrés et 20 degrés.

7. Utilisation selon la revendication 6, dans laquelle ledit angle d'hélice est égal à 7,9 degrés.

8. Utilisation selon l'une quelconque des revendications 1 à 7,
dans laquelle chacune de ladite au moins une partie de crête comporte une partie supérieure courbe (2a, 3a, 4a) et une paire de parois latérales (2c, 3c, 4c) s'étendant à partir des extrémités opposées de ladite partie supérieure courbe afin de définir ainsi une rainure de forme sensiblement triangulaire.

9. Utilisation selon l'une quelconque des revendications 1 à 8, dans laquelle ledit fluide est un gaz.

10. Utilisation selon l'une quelconque des revendications 1 à 8, dans laquelle ledit fluide est un liquide.
